# EUROPEAN PATENT APPLICATION

(11) **EP 2 272 625 A2**
(43) Date of publication of application: **12.01.2011**
(21) Application number: 10166281.5
(22) Date of filing: 17.06.2010
(51) Int. Cl.: B23Q 3/12, B23B 31/16, B23Q 3/18, B23B 31/30, F16D 1/08

(54) **Coupling device**

(30) Priority: 09.07.2009 JP 2009162547
(71) Applicant: Murata Machinery, Ltd., Minami-ku Kyoto-shi Kyoto 601-8326 (JP)
(72) Inventor: Kozawa, Haruaki, Aichi 484-8502 (JP)
(74) Representative: HOFFMANN EITLE

(57) **Abstract**

A coupling device (1) includes axially opposed first and second members (21, 22) that are axially moved relative to each other to couple or decouple the first and second members (21, 22) with or from each other. First and second circular rows of teeth (31, 32) for positioning the first and second members (21, 22) in a circumferential direction upon their engagement are coaxially provided on respective mating surfaces of the first and second members. Also, contact areas (33, 34) are employed on the mating surfaces of the first and second members, respectively, for positioning the first and second members in an axial direction when axially opposed, respective contact faces (33a, 34a) are brought into contact with each other while the first and second circular rows of the teeth are engaged with each other.

## Description

### CROSS REFERENCE TO THE RELATED APPLICATION

This application is based on and claims Convention priority to Japanese patent application No. 2009-162547, filed July 9, 2009, the entire disclosure of which is herein incorporated by reference as a part of this application.

### BACKGROUND OF THE INVENTION

### (Field of the Invention)

The present invention relates to a coupling device for adjustably coupling two axially juxtaposed members with each other for adjustment of circumferential and axial positions of one of those members relative to the other and, more particularly, to the coupling device of the type referred to above that is designed to connect a main spindle and a chuck, both used in a lathe lathe turning machine with each other.

### (Description of the Related Art)

To facilitate replacement of a chuck, the Japanese Laid-open Utility Model Publication No. S63-57010 discloses a lathe turning machine of a kind, in which a main spindle and a chuck are detachably connected with each other. For example, as a coupling used in mounting a turret of the machine tool, a curvic coupling and a hirth coupling have been well known. Those couplings include two axially juxtaposed members having respective faces confronting with each other, with a plurality of teeth formed in each of those mutually confronting faces, so that the respective teeth of those two members may be meshed or engaged with each other. With such engagement those two members are coupled with each other and, also, positioned relative to each other in a direction circumferentially thereof Those couplings are known to be excellent in recovery accuracy and self-aligning property, and to have a high force transmitting capability.

Focusing on those features of the couplings, the inventors of the present invention have decided to employ the hirth coupling in coupling a main spindle of a lathe turning machine with a chuck. In such case, the following problems have been found.

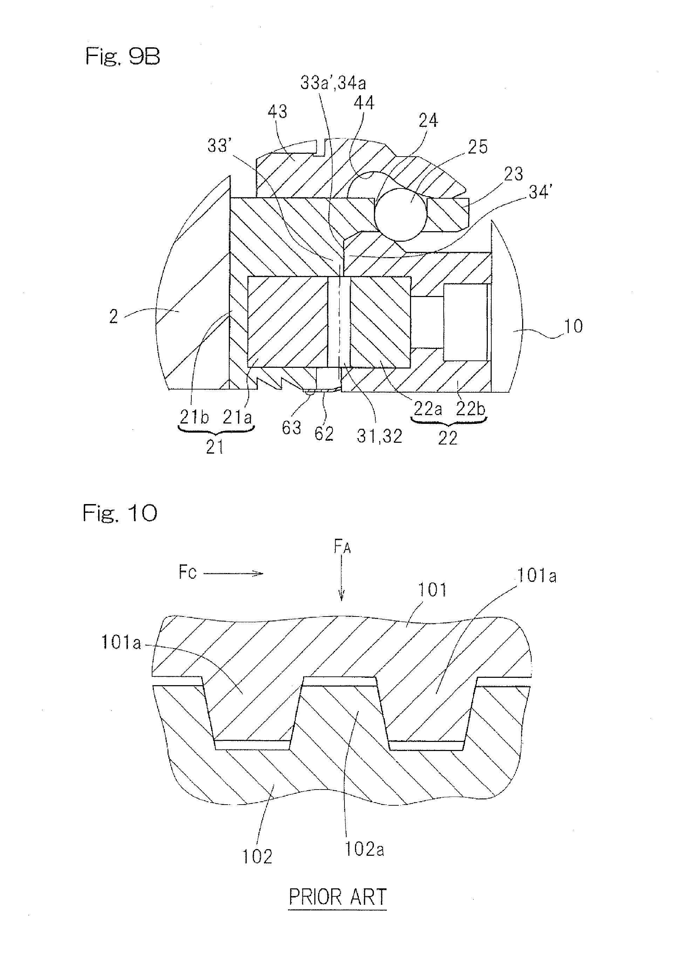

Fig. 10 illustrates a sectional view showing the manner in which the axially juxtaposed two members 101 1 and 102 are meshed with each other. As shown in this example, the hirth coupling is such that teeth 101 a and 102a of the respective members 101 and 102 have a trapezoidal sectional shape and are held in contact with each other at respective tapered side faces.

Let it be assumed that a circumferentially acting load FC and an axially acting load FA act from the first member 101 to the second member 102. Since, as hereinabove described, the respective teeth 101 a and 102a of the members 101 and 102 are held in contact with each other at their side faces, the rigidity against the circumferentially acting load FC is high and a large force can be supported. However, with respect to the axial direction, since the axially acting load FA is merely supported by the respective tapered side faces of the teeth 101a and 102a., the teeth 101a and 102a barely mesh with each other at a locality in the circumferential direction, particularly where the distribution of the axially acting load FA is deviated circumferentially, there is the possibility that some of the respective teeth 101a and 102 of the members 101 and 102 will loosely mesh thereby to locally lift relative to each other.

### SUMMARY OF THE INVENTION

In view of the foregoing, the present invention has for its primary object to provide a coupling device effective to couple axially juxtaposed two members with each other with their circumferential and axial positions having been adjusted highly accurately and particularly effective to increase the rigidity in the axial direction and the positioning accuracy in the axial direction.

Another object of the present invention is to increase the axial rigidity between the two coupled members referred to above and the axial positioning accuracy while the efficiency of replacement of the chuck in a lathe turning machine can be promoted.

In order to accomplish the foregoing object in accordance with the present invention, there is provided a coupling device which includes axially opposed first and second members having respective mating surfaces defined therein so as to confront with each other. The first member and the second member are adapted to be selectively connected with or separated from each other when one of the first and second members is axially moved relative to the other of the first and second members. First and second circular rows of teeth are provided on the mating surfaces of the first and second member, respectively, in coaxial relation with each other so that the teeth of the first and second circular rows can engage with each other to position the first and second members in a direction circumferentially thereof when the teeth of the first and second circular rows are engaged. The coupling device also includes first and second contact areas having respective contact faces which cooperate with each other to position the first and second members in a direction axially thereof, when brought axially into contact with each other upon coupling of the first and second member together with the teeth of the first circular row engaged with the teeth of the second circular row.

According to the present invention, engagement of the teeth provided respectively on the mating surfaces of the first and second members with each other makes it possible to position those first and second members in a direction circumferentially thereof. Also, when the contact areas, provided respectively on the mating surfaces of the first and second members, are axially brought into contact with each othirthose first and second members can be positioned in the axial direction. Accordingly, the first and second members, that are axially juxtaposed relative to each other, can be connected together with the circumferential and axial positions thereof having been accurately determined. Since the respective contact faces of the contact areas confront with each other in the axial direction, a large axially acting load can be supported. Also, even when a distribution of the axially acting load is biased in the circumferential direction, the respective contact faces of the contact areas can be held in a condition contacted with each other and, therefore, those first and second members can be maintained in a properly positioned relation to each other.

It is to be noted that the first and second member referred to above may be respective members that are rotatably supported. If the first and second members are employed in the form of rotatably supported members, that is, rotary elements, accurate positioning of the circumferential position of those first and second members is effective to eliminate an undesirable deviation in phase of the first and second members during the rotation to thereby increase the rotational accuracy and also to increase the rigidity of a rotation transmitting unit.

According to a preferred embodiment of the present invention, each of the teeth provided in one or both of the first and second members may be formed with at least one trimmed void area for reducing the rigidity of such tooth. The trimmed void area may be constituted by, for example, a radially extending groove.

If the trimmed void area is employed in each of the teeth for reducing the rigidity of the latter, an elastic deformation of the teeth in the circumferential direction can be facilitated particularly when, while the teeth in those first and second member are engaged with each other, a load is imposed on side faces of each of those teeth. The teeth can be engaged deep in mating dale portions, each position defined between the neighboring teeth, in a quantity corresponding to the amount of each tooth, which have been elastically deformed in the circumferential direction. As a consequence the axial distance between the first and second members is rendered to be small, enabling the contact areas of the first and second members to be assuredly brought into contact with each other. Accordingly, a large axially acting load can be supported between the first and second members and, also, the axial positioning can be accomplished assuredly.

If the trimmed void area is employed in the form of a radially extending groove, the rigidity of each of the teeth can be effectively reduced. In addition, the use of the radially extending groove for the trimmed void area is effective to simplify the structure and also to facilitate the manufacture.

According to another preferred embodiment of the present invention, the radially extending groove may be either a V-sectioned groove or a slit having a groove width that is uniform in a direction towards the bottom thereof. Where the slit is employed for the radially extending groove, a plurality of grooves may be employed. Alternatively, the trimmed void area may be constituted by a radially extending throughhole defined within each of the teeth.

In the practice of the present invention, the first and second members referred to above may be fitted to a main spindle and a chuck of a lathe turning machine, respectively, in which case they cooperate with each other to define a joint at which the chuck is separably connected with the main spindle.

If the coupling device of the present invention is used in a joint between the main spindle and the chuck of the lathe turning machine, coupling or decoupling of the chuck with or from the main spindle can be simplified and the replacement of the chuck can be performed efficiently.

The contact areas referred to above may be positioned radially outwardly of the first and second circular rows of the teeth, respectively, and be formed respectively over the entire circumferences of the first and second members. According to those structural features, the contact areas substantially completely shield the teeth on the first and second members, which are then positioned radially inwardly of the contact areas, from the outside and, accordingly, it is possible to avoid an undesirable ingress of foreign matter such as, for example, swarf produced during processing, into an area where the teeth on the first and second members are meshed with each other. As a result, it is possible to maintain the condition, in which the circumferential and axial positions of the first and second members are accurately positioned.

In a further preferred embodiment of the present invention, the contact areas may alternatively be positioned radially inwardly of the first and second circular rows of the teeth, in which case, the use is made of a sealing member, which permits respective outer peripheral portions of the first and second members radially outwardly of the first and second circular rows of the teeth to be held in engagement with each other with such sealing member intervening therebetween. According to this structural feature, since the sealing member is provided radially outwardly of the circular row of the teeth, the respective teeth on the first and second members can be kept in a condition shielded from the outside. As a result, it is possible to maintain the condition, in which the circumferential and axial positions of the first and second members are accurately positioned, while an undesirable ingress of foreign matter such as, for example, swarf produced during processing, into an area where the teeth on the first and second members are meshed with each other, is effectively avoided.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a longitudinal view, with a portion shown in section, of a portion of a lathe turning machine, where a coupling device according to a first preferred embodiment of the present invention is mounted, with the coupling device held in one operating condition;
Fig. 1B is an end view of a first coupling member, mounted on a lathe turning machine main spindle, of the coupling device as viewed along the line IB-IB in Fig. 1A;
Fig. 1C is an end view of a second coupling member, mounted on a chuck, of the coupling device as viewed along the line IC-IC in Fig. 1A;
Fig. 2 is a schematic fragmentary sectional view on an enlarged scale, showing the respective shapes of teeth formed in the first and second coupling members of the coupling device;
Fig. 3 is a schematic longitudinal sectional view, showing, on an enlarged scale, a coupling operating mechanism of the coupling device and a drive unit of a chuck pawl driving mechanism;
Fig. 4 is a view similar to Fig. 1A. showing a different operating condition of the coupling device;
Fig. 5 is a view similar to Fig. 1A, showing a further operating condition of the coupling device;
Fig. 6A is a view similar to Fig. 1A, showing a still further operating condition of the coupling device;
Fig. 6B is a schematic diagram showing a portion of Fig. 6A, depicted within the circle VIB, on an enlarged scale;
Fig. 7A is a fragmentary plan view of one of the teeth in the second coupling member of the coupling device, showing different shapes of trimmed void areas defined in such tooth;
Fig. 7B is a side sectional view of such one of the teeth in the second coupling member, showing respective sectional shapes of the trimmed void areas shown in Fig. 7A;
Fig. 8A is a view similar to Fig. 7A, further shapes of the trimmed void areas;
Fig. 8B is a view similar to Fig 7B, showing respective sectional shapes of the trimmed void areas shown in Fig. 8A;
Fig. 9A is a view similar to Fig. 1A, showing the coupling device according to a second preferred embodiment of the present invention;
Fig. 9B is a schematic diagram showing a portion of Fig. 9A, depicted within the circle VIB, on an enlarged scale; and
Fig. 10 is a schematic fragmentary sectional view on an enlarged scale, showing the respective shapes of teeth formed in the first and second coupling members of the prior art hirth coupling device;

### [Reference Numerals]

- 1:: Coupling device
- 2:: Main spindle
- 3;: Chuck
- 21:: First member
- 11:: Second member
- 31, 32: Tooth
- 33, 34 33', 34': Contact area
- 33a, 34a 33a' 34a': Contact face
- 35:: Trimmed void area

### DETAILED DESCRIPTION OF THE EMBODIMENTS

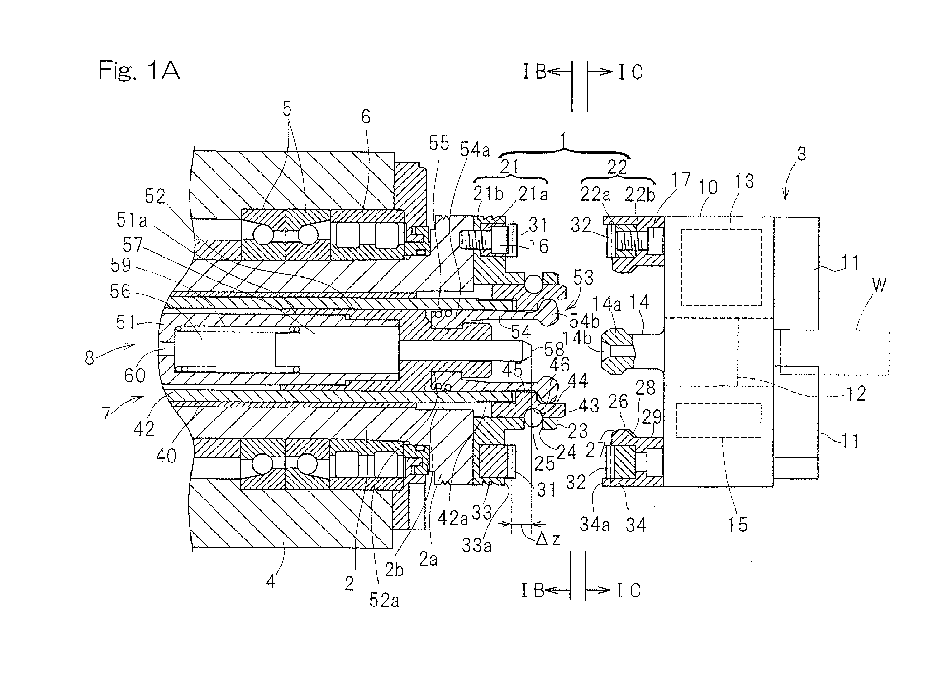

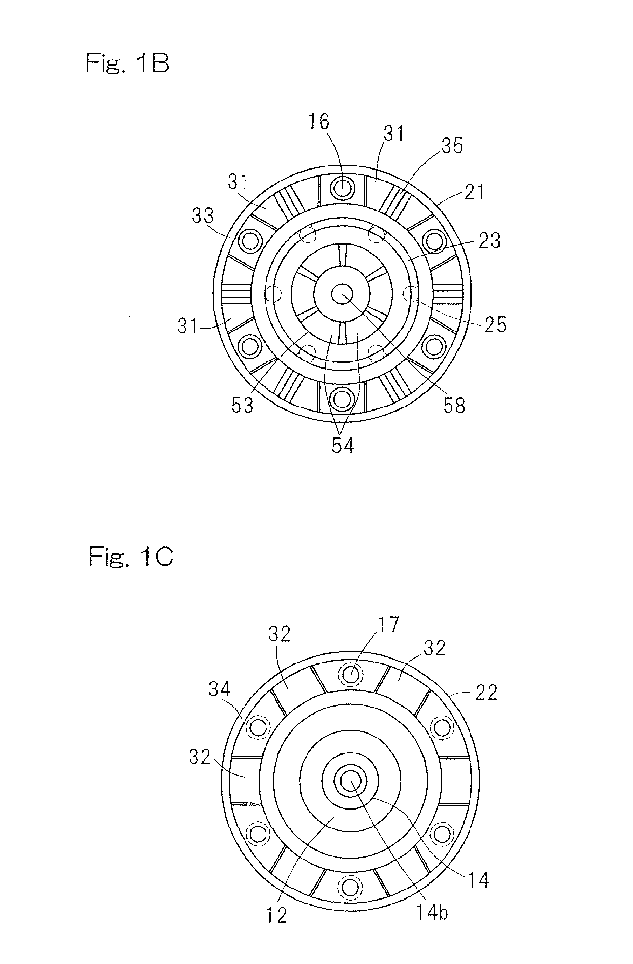

A coupling device according to a first preferred embodiment of the present invention will be described in detail with particular reference to Figs. 1A to 6B. The illustrated coupling device, now generally identified by 1, is in a type used in a joint at which a main spindle 2 and a chuck 3 in a lathe turning machine are connected together. The lathe turning machine shown in Fig. 1 includes a spindle stock 4 mounted on a machine bed (not shown), and the main spindle 2 is rotatably supported by this spindle stock 4 by means of a plurality of rolling bearing assemblies 5 and 6. The main spindle 2 has a front end (on a right side as viewed in Fig. 1A) enlarged in diameter to define a shaft head 2a, and the chuck 3 referred to above is adapted to be removably connected with the shaft head 2a through the coupling device 1. It is to be noted that Fig. 1A illustrates the coupling device held in a decoupled condition, in which the main spindle 2 and the chuck 3 are separated from each other.

The main spindle 2 is in the form of a hollow or quill shaft having a center bore 2b defined therein, and a coupling operating mechanism 7 for selectively coupling or decoupling the coupling device 1 and a chuck pawl drive mechanism 8 for selectively opening or closing a plurality of chuck pawls 11 of the chuck 3 are accommodated within the center bore 2b. The coupling operating mechanism 7 and the chuck pawl drive mechanism 8, both referred to above, will be described individually in detail later.

The chuck 3 referred to above is of a type including a chuck body 10 provided with the plural chuck pawls 11 so that the latter can be driven in unison with each other in a direction radially outwardly or inwardly to open or close the chuck pawls 11 to thereby release or clamp a tool (not shown), respectively, in a manner well known to those skilled in the art. As a matter of design, the chuck pawls 11 are arranged equidistantly in a direction circumferentially of the chuck body 10.

An axially movable open/close operating member 12 is provided in a center portion of the chuck body 10 so that when the open/close operating member 12 is axially moved, such axial movement of the open/close operating member 12 can be translated by a drive converting mechanism 13 into radial movement of the chuck pawl 11 in unison with each other. More specifically, when the open/close operating member 12 is advanced, that is, moved rightwards as viewed in Fig. 1A, the chuck pawls 11 can be radially outwardly moved to open, but when the open/close operating member 12 is retracted, that is, moved leftwards as viewed in Fig. 1A, the chuck pawls 11 can be radially inwardly moved to close.

The chuck 3 includes an engagement projection 14 protruding axially rearwardly from a rear surface (back surface) of the open/close operating member 12. This engagement projection 14 has a bulged portion 14a defined at a rear end portion thereof and capable of bulging radially outwardly and also has a recess 14b defined in a center portion of a rear end face thereof. The open/close operating member 12 can be selectively advanced or retracted when the chuck pawl drive mechanism 8 acts on this engagement projection 14.

The chuck body 10 is provided with a chuck pawl biasing means 15 for biasing the chuck pawls 11 to normally assume a closed position regardless of the movement of the open/close operating member 12. This chuck pawl biasing means 15 is in the form of, for example, a coiled compression spring. In view of the fact that the chuck pawls 11 are biased by the chuck pawl biasing means 15 to normally assume the closed position, the chuck pawl biasing means 15 makes it possible for the chuck pawls 11 to hold a work W, then fitted to such chuck 3, at all times even when the chuck 3 is separated or released from the main spindle 2 and the movement of the chuck pawl drive mechanism 8 is not therefore transmitted to the chuck open/close member 12.

The coupling device 1 also includes a first annular member 21, fixed to an annular front end face of the shaft head 2a of the main spindle 1 by means of a plurality of set bolts 16, and a second annular member 22 fixed to a rear end face of the chuck body 10 by means of a plurality of set bolts 17. The first annular member 21 has an inner peripheral edge portion provided with a cylindrical projecting edge segment 23 protruding towards the second annular member 22 when and so long as the first and second annular members 21 and 22 are connected with each other, and a plurality of circumferentially spaced radial throughholes 24 are formed in this cylindrical projecting edge segment 23 so as to extend radially therethrough. Detent balls 25 equal in number to the number of the circumferentially spaced radial throughholes 24 are accommodated within those radial throughholes 24 for movement in a direction radially of the projecting edge segment 23. Each of the radial throughholes 24 in the projecting edge segment 23 is so shaped and so designed that the corresponding detent ball 25 accommodated therein will never depart outwardly therefrom even though such detent ball 25 may partly protrude outwardly of the associated radial throughhole 23. Specifically, this can be accomplished by, for example, radially inwardly constricting a peripheral edge of a radially outer open end of each of those throughholes 24.

On the other hand, the second annular member 22 has an inner peripheral surface provided with a minimum inner diametric portion 26 in the form of an annular projecting portion protruding radially inwardly thereof. The minimum inner diameter, which is the inner diameter of the minimum inner diametric portion 26, is so chosen as to be equal to or somewhat greater than the outer diameter of the projecting edge segment 23 referred to above so that the minimum inner diametric portion 26 can receive therein the projecting edge segment 23 or, conversely, the projecting edge segment 23 can be engaged in the minimum inner diametric portion 26.

The minimum inner diametric portion 26 is positioned at a rear end of the second annular member 22, that is, at one end portion adjacent to the first annular member 21 when and so long as the first and second members 21 and 22 are connected together. An inner peripheral surface of the second annular member 22 ranging from the minimum inner diametric portion 26 to a rear end face is defined as a chamfered surface portion 27 having an arcuate sectional shape. An inner peripheral surface forwardly of the minimum inner diametric portion 26 includes a tapered surface area 28, forming a stepped face forwardly of the minimum inner diametric portion 26 and flared outwardly in a direction forwardly of the chuck 3, and a large diameter portion 29 of a constant inner diameter continued to the tapered surface area 28.

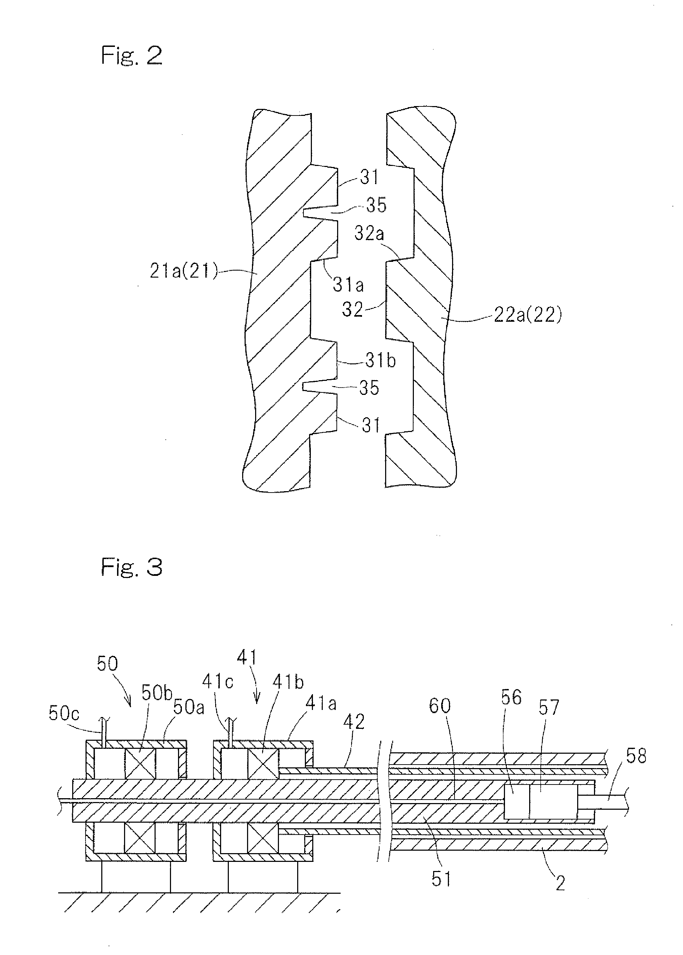

Respective mating surfaces of the first and second annular members 21 and 22, which confront with each other, are provided with circular rows of pluralities of teeth 31 and 32, respectively, which are coaxial with each other and which are adapted to be meshed with each other when the chuck 3 is coupled to the main spindle 2. As best shown in Figs. 1B and 1C, each of the teeth 31 in the first annular member 21, when viewed in a plane perpendicular to the axial direction, represents a substantially sector shape, but each of the teeth 32 in the second annular member 22, when similarly viewed in a plane perpendicular to the axial direction, represents a substantially rectangular shape. Also, as best shown in Fig. 2, the teeth 31 and 32 in the first and second annular members 21 and 22 represent a substantially trapezoidal shape, when viewed in section in a direction circumferentially, and have respective opposite side faces 31a and 32a each corresponding to opposite slant sides of the trapezoidal shape. Those side faces 31a and 32a of the teeth 31 and 32 in the first and second annular members 21 and 22 are engageable with each other to thereby position the first and second annular members 21 and 22 relative to each other in a direction circumferentially thereof.

For the convenience of processing, in the illustrated embodiment, as best shown in Fig. 1A, the first annular member 21 includes a first annular tooth defining segment 21a forming the circular row of the teeth 31, whereas the second annular member 22 similarly includes a second annular tooth defining segment 22a forming the circular row of the teeth 32. The first annular tooth defining segment 21a and the second annular tooth defining segment 22a are members separate from, but are rigidly secured to respective annular bodies 21 b and 22b of the first and second annular members 21 and 22. The first annular tooth defining segment 21 a is seated within an annular groove, defined in the annular body 21b, and is then rigidly secured to thereto by means of a plurality of set bolts 16. On the other hand, the second annular tooth defining segment 22a referred to above is seated similarly within an annular groove, defined in the annular body 22b, and is then rigidly secured to thereto by means of a plurality of set bolts 17.

Each of the set bolts 16, which are used to secure the first annular tooth defining segment 21a to the annular body 21b, is inserted through a corresponding hole defined in an area of a tooth bottom portion of the associated tooth defining segment 21 a between the neighboring teeth 31 and 31. Similarly, each of the set bolts 17, which are used to secure the second annular tooth defining segment 22a to the annular body 22b, is inserted through a corresponding hole defined in an area of a tooth bottom portion of the associated tooth defining segment 22a between the neighboring teeth 32 and 32. As best shown in Figs. 1B and 1C, the set bolts 16 and 17 referred to above are positioned at those tooth bottom portions when they are used to fasten the respective first and second annular tooth defining segments 21a and 22a to the annular bodies 21b and 22b.

It is to be noted that the set bolts 16 concurrently serve to fasten the first annular member 21 to the shaft head 2a of the main spindle 2. It is also to be noted that each of the first and second annular members 21 and 22 may be of a unitary member having the tooth defining segment 21 a or 22a formed integrally with the associated annular body 21 b or 22b.

As clearly shown in Fig. 1A, an outer peripheral portion of the annular body 21b, which portion lies radially outwardly of the associated circular row of the teeth 31 situated in the mating surface of the first annular member 21, is defined as a contact area 33 extending over the entire circumference of such outer peripheral portion and having a contact face 33a defined therein. Similarly, an outer peripheral portion of the annular body 22b, which portion lies radially outwardly of the associated circular row of the teeth 32 situated in the mating surface of the second annular member 22, is defined as a contact area 34 extending over the entire circumference of such outer peripheral portion and having a contact face 34a defined therein. The contact faces 33a and 34a of the contact areas 33 and 34 confront axially with each other when the first and second members 21 and 22 are axially aligned with each other. Specifically, in a condition, in which the first and second members 21 and 22 are connected together by meshing the teeth 31 of the first annular member 21 with the teeth 32 of the second annular member 22, the contact faces 33a of the contact area 33 is held in contact with the contact face 34a of the contact area 34 to thereby position the first member 21 axially relative to the second member 22, and vice versa.

Referring now to Fig. 2, each of the teeth 31 in the first annular member 21 is formed with at least one trimmed void area 35 employed for the purpose of reducing the rigidity of the respective tooth 31. This trimmed void area 35 for that purpose can be defined by deleting a portion of the respective tooth 31 and is, in the illustrated embodiment, employed in the form of a generally V-sectioned groove defined on center portion of a substantially flattened crest of such respective tooth 31 so as to extend radially inwardly thereof. The trimmed void area or groove 35 has a depth slightly greater than the height of each of the teeth 31 as clearly shown in Fig. 2. In other words, the bottom of the V-sectioned groove 35 may reach a position axially rearwardly beyond the level of the bottom of the respective tooth 35.

Since the rigidity of each of the teeth 31 is so reduced by the provision of the trimmed void area 35 in the respective tooth 31, it is possible to allow the respective tooth 31 to elastically deform in a direction circumferentially of the first annular member 21 when, as a result of engagement between the teeth 31 in the first annular member 21 and the teeth 32 in the second annular member 22, a load is imposed on the side face 31a of the respective tooth 31. Since as hereinbefore described each of the teeth 31 and 32 represents a trapezoidal sectional shape as clearly shown in Fig. 2, the teeth 31 can be engaged deep in mating dale portions, each defined between the neighboring teeth 32, and vice versa, in a quantity corresponding to the amount of elastic deformation of the teeth 31. As a result, the axial distance between the first and second annular members 21 and 22 is rendered to be small enough to allow the contact areas 33 and 34 of the first and second annular members 21 and 22 to be assuredly brought into contact with each other. Accordingly, a large axially acting load can be supported between the first and second annular members 21 and 22 and, also, the axial positioning therebetween can be accomplished assuredly.

It is to be noted that although in the embodiment now under discussion, the trimmed void area 35 in the form of the groove has been shown and described as formed only in each of the teeth 31 in the first annular member 21, a trimmed void area similar to the trimmed void area 35 shown and described may be formed in each of the teeth 32 in the second annular member 22.

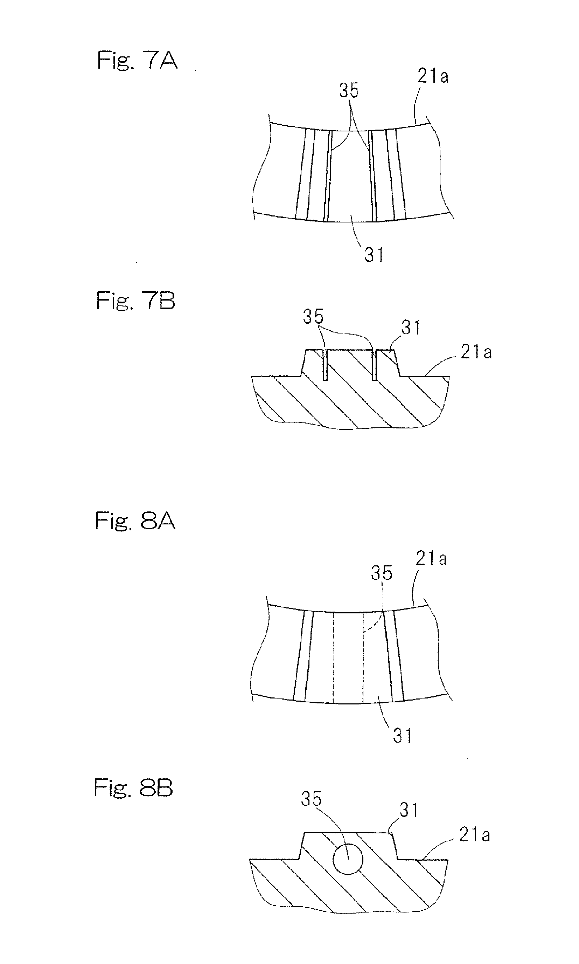

The trimmed void area 35 may be employed in the form of a slit-like groove having a groove width that is uniform in a direction towards the bottom of such groove as best shown in Figs. 7A and 7B. Even in the case of the slit-like groove it is advantageous to form it extending radially to effectively reduce the rigidity of each of the teeth 31, as shown in Fig. 7A.

It is to be noted that the number of the trimmed void area 35 may not be necessarily limited to one, but a plurality of trimmed void areas can be equally employed. Specifically, in the example shown in Figs. 7A and 7B, each of the teeth 31 is shown to have two slit-like grooves for the trimmed void areas 35. In addition, as best shown in Figs. 8A and 8B, each of the trimmed void areas 35 may be employed in the form of a throughhole defined inside each of the teeth 31 so as to extend in a direction radially of the first annular member 21 or the first annular tooth defining segment 21a, and even in this case, the rigidity of each of the teeth 31 can be effectively reduced.

Referring again to Fig. 1A, the coupling operating mechanism 7 includes a substantially cylindrical coupling drive member 42 adapted to be selectively advanced and retracted by a coupling drive source 41 (shown in Fig. 3) along an inner peripheral surface of the main spindle 2 through a slide guide 40 in the axial direction parallel to the main spindle 2. This coupling drive member 42 has a front end portion having a helical thread 42a defined on an outer periphery thereof, and a ball drive member 43 is threadingly mounted on that front end portion of the coupling drive member 42 for movement together with such coupling drive member 42.

The ball drive member 43 is also of a generally cylindrical configuration, having its outer peripheral surface formed with a plurality of substantially semicircular sectioned detent recesses 44, for receiving the detent ball 25, at respective locations corresponding to the radial throughhole 24 defined in the first annular member 21.

This ball drive member 43 has an inner peripheral surface formed with a reduced diameter portion 45, defined at a portion thereof generally intermediate of the axial length thereof, and a large diameter portion 46 defined in a front end portion thereof and on one side of the reduced diameter portion 45 opposite to a mating helical thread meshed with the helical thread 42a referred to previously. The reduced diameter portion 45 has an inner diameter substantially equal to the inner diameter of the coupling drive member 42.

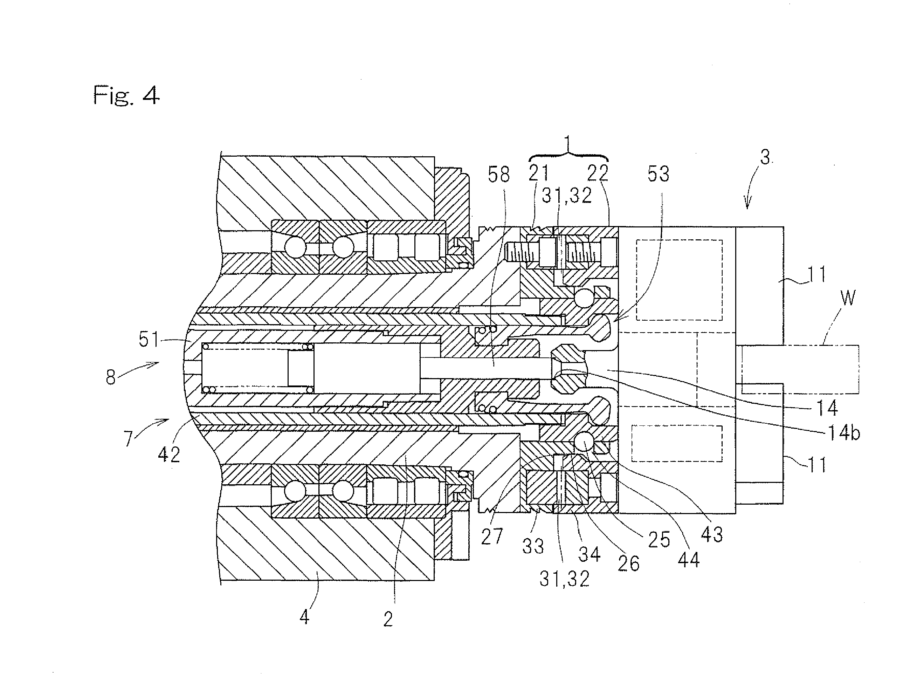

In the condition, in which the chuck 3 is separated from the main spindle 2 such as shown in Fig. 1A, the detent recesses 44 in the ball drive member 43 are radially aligned with the radial throughhole 24, respectively. In other words, the detent recesses 44 is positioned in the same axial location with the radial throughholes 24. Because of this, the detent balls 25 are received in part within the associated radial throughholes 24 and in part within the corresponding detent recesses 44. In the condition that the detent balls 25 are received in part within the associated radial throughholes 24 and in part within the corresponding detent recesses 44 as hereinabove described, the detent balls 25 will not constitute any obstruction to the engagement of the second annular member 22 with the first annular member 21, which engagement is preceded by moving the second annular member 22 axially rearwardly towards the first annular member 21 with the minimum diameter portion 26 of the second annular member 22 past radially outwardly of the cylindrical projecting edge segment 23 of the first annular member 21. Hence, as shown in Fig. 4, the first and second annular members 21 and 22 can be engaged with each other until the respective teeth 31 and 32 in the first and second annular members 21 and 22 are meshed with each other and, at the same time, the contact areas 33 and 34 are brought into engagement with each other. Also, since a portion of the inner peripheral surface of the second annular member 22 ranging from the minimum diametric portion 26 to the rear end face thereof is formed as the chamfered surface portion 27, the engagement between the first and second annular members 21 and 22 takes place smoothly.

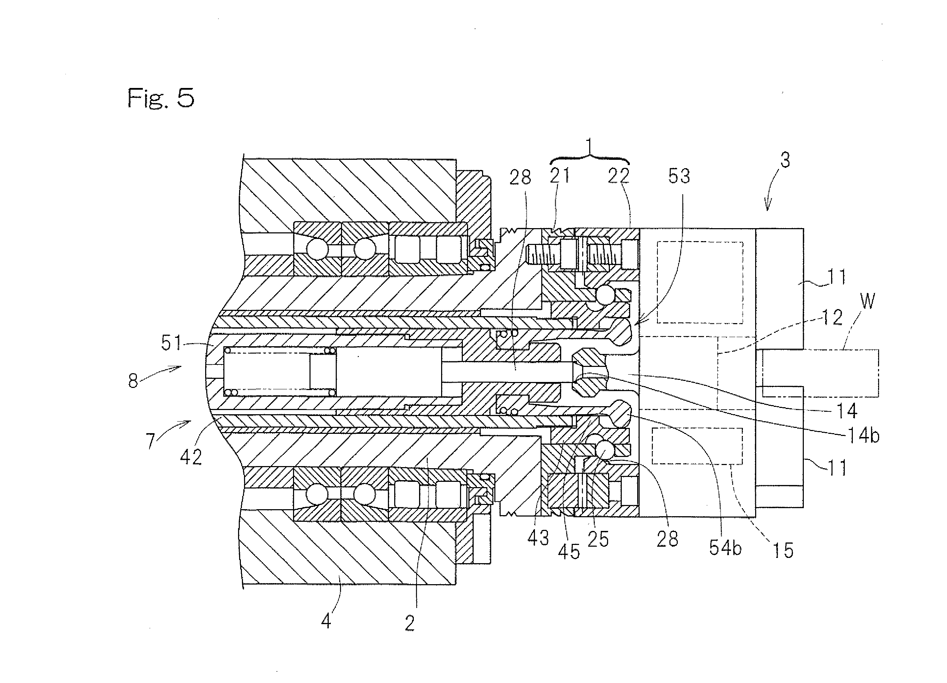

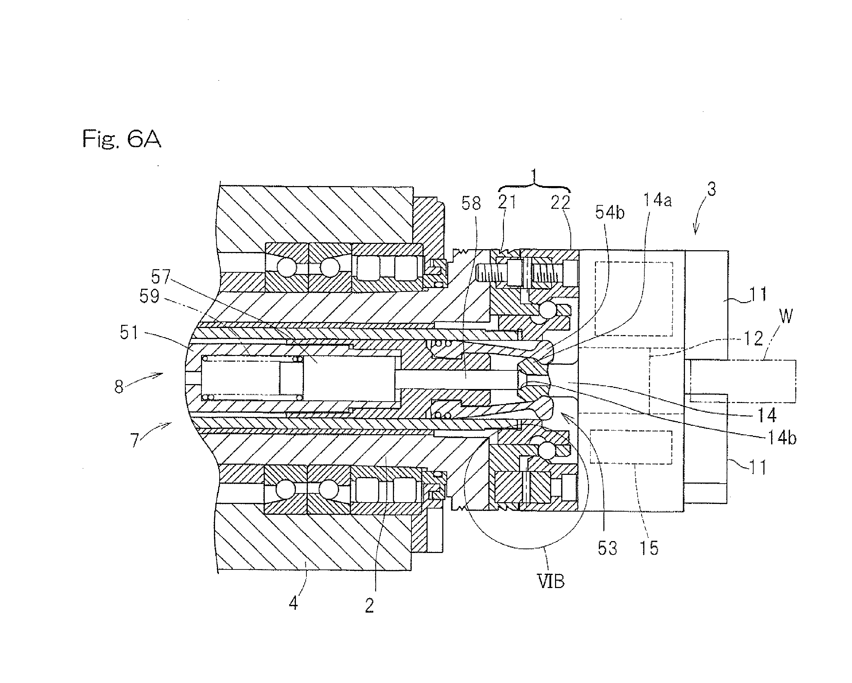

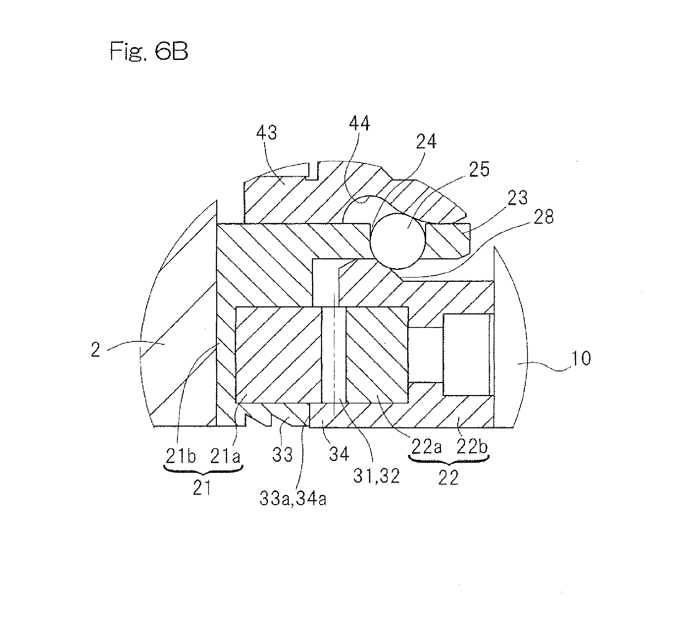

When starting from the condition shown in Fig. 4, the coupling drive member 42 is retracted axially rearwardly, i.e., leftwards as viewed in Fig. 4, accompanied by a corresponding rearward movement of the ball drive member 43, the detent balls 25 are urged radially outwardly in sliding contact with the ball drive member 43 to depart from the detent recesses 44 in the ball drive member 43. Accordingly, those respective portions of the balls 25, which are remote from the detent recesses 44 and have been seated completely within the corresponding detent throughholes 24, come to protrude outwardly from the associated throughholes 24 in the first annular member 21, substantially as shown in Figs. 5, 6A and 6B. Those balls 25 are subsequently brought into engagement with the tapered surface area 28 of the inner peripheral surface of the second annular member 22. As a result, the relative axial movement of the first and second annular members 21 and 22 are constrained to thereby integrate the coupling device 1, that is, to thereby firmly connect the chuck 3 with the main spindle 2.

As best shown in Fig. 1A, the chuck pawl drive mechanism 8 referred to previously includes a chuck pawl drive member 51, which is selectively advanced or retracted by a chuck pawl closer 50 (shown in Fig. 3) for providing a drive force necessary to close the chuck pawls 11. The chuck pawl drive member 51 has a front end portion having a helical thread 51 a defined on an outer peripheral surface thereof. The chuck pawl drive mechanism 8 further includes a slide member 52 threadingly mounted on the front end portion of the chuck pawl drive member 51 through the helical thread 51a for movement together therewith. The slide member 52 has an outer peripheral surface slidably engaged with an inner peripheral surface of the coupling drive member 42 referred to previously. The chuck pawl drive mechanism 8 still further includes a chuck draw bar front end member 53 disposed radially intermediate between a reduced diameter portion 52a of the slide member 52, defined in the slide member 52 adjacent a front end, and the coupling drive member 42. It is to be noted that the chuck pawl drive member 51, the slide member 52 and the chuck draw bar front end member 53, all referred to above, altogether constitute a chuck draw bar.

The chuck draw bar front end member 53 includes a plurality of circumferentially spaced and generally elongated draw bar split segments 54 arranged in a circular row coaxial with the main spindle 2 and having their base or rear ends 54a bundled together by means of a bundling member 55. The respective base ends 54a of the draw bar split segments 54 are constrained between front and rear stepped faces that lie on respective sides of the reduced diameter portion 52a of the slide member 52 and the chuck draw bar front end member 53 having the draw bar split segments 54 is therefore held immovable relative to the slide member 52 in an axial direction parallel to the main spindle 2.

Each of the draw bar split segments 54 extends forwards from its base end 54a and has its front end formed with a bulged catch element 54b bulged radially outwardly and inwardly. Each of those draw bar split segments 54 in its entirety has a resiliency.

Also, the chuck pawl drive member 51 has its interior formed with a cylinder chamber 56, into which a piston member 57 is accommodated for movement in the axial direction. The cylinder chamber 56 and the piston member 57, both referred to above, altogether constitute a chuck pawl opener for providing a drive force necessary to open the chuck pawls 11. The piston member 57 has a piston rod 58 rigidly connected thereto so as to extend perpendicular thereto and in the axial direction parallel the main spindle 2. This piston rod 58 rigid with the piston member 57 slidably extends forwards through the slide member 52 and is normally biased by a piston biasing spring 59 in an axially forward direction with a front end portion thereof situated outside the slide member 52. A fluid supply passage 60 for supplying a fluid medium such as, for example, an oil into the cylinder chamber 56 for driving the piston member 57 is defined within the chuck pawl drive member 51 so as to extend in the axial direction parallel to the main spindle 2.

In the condition shown in Fig. 1A, in which the chuck 3 is separated from the main spindle 2, the bulged catch elements 54b of the respective draw bar split segments 54 forming the chuck draw bar front end member 53 are held in alignment with and rests on the large diameter portion 46 of the ball drive member 43, with the draw bar split segments 54 extending substantially straight forwards. For this reason, when the first and second annular members 21 and 22 of the coupling device 1 are being connected with each other as best shown in Figs. 4 and 5, the engagement projection 14 of the chuck 3 does not contact the chuck draw bar front end member 53, but as the first and second annular members 21 and 22 are connected together the front end of the piston rod 58 comes to be engaged in the recess 14b defined in the engagement projection 14.

Also, in the condition as shown in Fig. 1A, the piston member 57 then biased axially forwards by the piston biasing spring 59 is positioned at a forward position occupying a front end of the stroke of movement thereof within the cylinder chamber 56. At this time, the front end of the piston rod 58 is positioned at a location spaced a distance Δz axially forwards from an axial position at which the center of the meshed engagement between the teeth 31 in the first annular member 1 and the teeth 32 in the second annular member 22 exists.

Starting from the condition shown in Fig. 5, as the chuck pawl drive member 51 is axially retracted, the bulged catch elements 54b of the respective draw bar split segments 54 forming the chuck draw bar front end member 53 are radially inwardly urged in contact with the reduced diameter portion 45 of the ball drive member 43, accompanied by radially inward deflection of respective front end portions of the draw bar split segments 54. Accordingly, as best shown in Fig. 6A, the bulged catch elements 54b of the draw bar split segments 54 are radially inwardly brought into engagement with the bulged portion 14a of the engagement projection 14 fast with the chuck 3.

As the chuck pawl drive member 51 is further retracted axially, the chuck draw bar front end member 53, with the bulged catch elements 54b then gripping the bulged portion 14a of the engagement projection 14, pulls the engagement projection 14 in a direction axially rearwardly to retract the open/close operating member 12 with the chuck pawls 11 consequently undergoing a closing operation to hold the work W. In view of this, the chuck pawls 11 cooperate with each other to firmly hold the work W by the effect of a biasing force, exerted by the chuck pawl biasing means 15, and a strong gripping force exerted by a fluid pressure of the chuck pawl closer 50 (best shown in Fig. 3).

It is to be noted that the engagement of the front end of the piston rod 58 in the recess 14b of the engagement projection 14 can be maintained since, as the chuck pawl drive member 51 is axially retracted, the piston member 57 is advanced as urged by the resilient repulsive force of the piston biasing spring 59 a distance corresponding to the axially rearward movement of the chuck pawl drive member 51 that has taken place.

When starting from the condition as shown in Fig. 6A, the chuck pawl drive member 51 is axially advanced, closure of the chuck pawls 11, effected by the chuck pawl closer 50 (shown in Fig. 3), is released to again establish the condition shown in Fig. 5. When the piston member 57 is subsequently driven axially forwards while the condition shown in Fig. 5 is established, accompanied by forward movement of the piston rod 57 to push the engagement projection 14 forwards, the open/close operating member 12 is advanced, allowing the chuck pawls 11 to open against the biasing forces exerted by the chuck pawl biasing means 15.

Referring to Fig. 3, there is shown a schematic diagram showing one example of a drive unit for the coupling operating mechanism 7 and the chuck pawl drive mechanism 8. The coupling drive source 41 shown therein is in the form of a fluid operated cylinder such as, for example, a hydraulic cylinder and includes a cylinder body 41 a, fixed in position, and a piston member 41b connected to a rear end of the coupling drive member 42 for movement together therewith. The piston member 41b is accommodated within a cylinder chamber, defined in the cylinder body 41 a, for axial sliding movement along and, also, rotation about the chuck pawl drive member 51. A fluid medium is supplied into the cylinder chamber in the cylinder body 41a by means of a fluid supply passage 41 c.

The chuck pawl closer 50 is also employed in the form of a fluid operated cylinder such as, for example, a hydraulic cylinder and includes a cylinder body 50a, fixed in position, and a piston member 50b connected to the chuck pawl drive member 51 for movement together therewith. The piston member 50b is accommodated within a cylinder chamber, defined in the cylinder body 50a, for axial sliding movement along and, also, rotation about the chuck pawl drive member 51. A fluid medium is supplied into the cylinder chamber in the cylinder body 50a by means of a fluid supply passage 50c.

Processing with the work W shown in Fig. 1A is carried out while the work W is gripped by the chuck pawls 11 then held in the closed position. At this time, as shown in Fig. 6B showing a portion of Fig. 6A, depicted within the circle VIB, on an enlarged scale, the contact faces 33a and 34a, defined over entire circumferences of the respective contact areas 33 and 34 adjacent the outer peripheries of the first and second annular members 21 and 22, are held in contact with each other. Therefore, the teeth 31 and 32 in the first and second annular members 21 and 22, which are then meshed with each other and positioned radially inwardly of the associated contact areas 33 and 34, are substantially completely shielded from the outside.

The fact that the mutually meshed teeth 31 and 32 are substantially completely shielded from the outside in the manner as hereinabove described is particularly advantageous in that an undesirable ingress of foreign matter such as, for example, swarf, produced during the processing, from the outside in a direction radially inwardly of the first and second annular members 21 and 22 can be avoided to allow the first and second annular members 21 and 22 to be maintained in respective accurately positioned conditions with respect to the circumferential and axial positions thereof.

Also, each of the first and second annular members 21 and 22 is a rotatably supported member, that is, a rotary element and, hence, when the circumferential position of each of the first and second annular members 21 and 22, which are rotary elements, is accurately determined, an undesirable deviation in phase of one of the first and second annular members 21 and 22 relative to the other of the first and second annular member 21 and 22 during the rotation can be eliminated, resulting in increase of the rotation accuracy.

Since coupling or decoupling of the chuck 3 with or from the main spindle 2 are easily and readily accomplished, the lathe turning machine provided with the coupling device 1 of the structure shown in Fig. 1A can be used not only for the purpose of exchanging the chuck 3 according to the type of the work W to be held thereby, but also it can be used in the following manner: Specifically, if the chuck 3 with the work W then gripped thereby is replaced with another chuck, while the processing of the work W takes place with one chuck 3 coupled with the main spindle 2, removal or mounting of a work W relative to another chuck 3 and cleansing of the chuck 3 can be performed. Accordingly, the processing efficiency can be increased. When the chuck is in a condition separated from the main spindle 2, the work W can be held by the chuck 3 by the effect of the biasing force exerted by the chuck pawl biasing means 15 used to bias the chuck pawls towards the closed position.

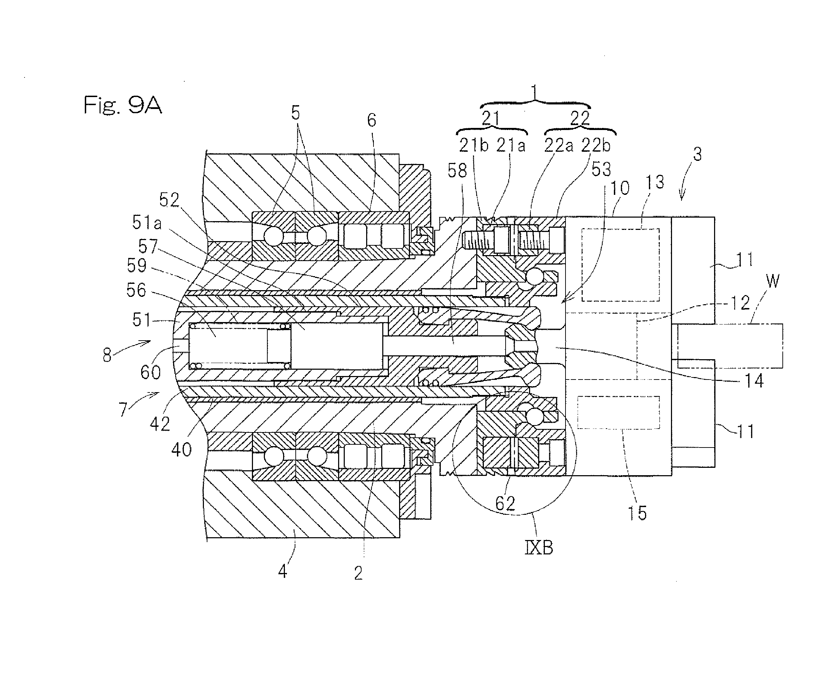

Figs. 9A and 9B illustrates a second preferred embodiment of the present invention. The illustrated coupling device 1 according to this alternative embodiment is so designed that unlike the coupling device 1 according to the previously described embodiment, contact areas 33' and 34' having respective contact faces 33a' and 34a', which confronted with each other in the axial direction, are formed radially inwardly of the associated circular rows of the teeth 31 and 32 in the opposed surfaces of the first and second annular members 21 and 22 as best shown in Fig. 9B. In this case, the contact areas 33' and 34' may not necessarily be formed over the entire circumference.

Respective outer peripheral portions of the opposed surfaces of the first and second annular members 21 and 22, which are radially outwardly of the associated circular rows of the teeth 31 and 32, can be brought into contact with each other through a sealing member 62 fitted to either one of the first annular member 21 and the second annular member 22. The sealing member 62 is made of resilient material such as rubber or soft resin. In the instance as shown in Fig. 9B, the sealing member 62 is rigidly secured to the first annular member 21 by means of a plurality of set screws 63.

Even when the sealing member 62 is provided on an outer peripheral side radially outwardly of the circular rows of the teeth 31 and 32 in the manner described above, it is possible to establish the condition in which the mutually meshed teeth 31 and 32 can be substantially completely shielded from the outside. Accordingly, as is the case with the previously described embodiment, an undesirable ingress of foreign matter such as, for example, swarf, produced during the processing, from the outside in a direction radially inwardly of the first and second annular members 21 and 22 can be avoided to allow the first and second annular members 21 and 22 to be maintained in respective accurately positioned conditions with respect to the circumferential and axial positions thereof.

Other structural features of the coupling device 1 according to this alternative embodiment, shown in Figs. 9A and 9B, than those described above are substantially similar to those employed in the previously described embodiment shown and described with particular reference to Figs. 1 to 5. As a matter of course, component parts of the coupling device 1, shown in Figs. 9A and 9B, which are similar to those shown in Figs. 1 to 5 and which are considered important, are designated by like reference numerals and, therefore, the details thereof are not reiterated for the sake of brevity.

Although in describing each of the foregoing preferred embodiments of the present invention, the coupling device 1 has been shown and described as used for removably connecting the chuck 3 with the main spindle 2 of the lathe turning machine, the coupling device 1 of the present invention can be equally employed in any other machine tool or any other machine than the machine tool. Also, the first and second annular members 21 and 22 forming the coupling device 1 of the present invention may not be necessary a rotary or rotatable member.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

## Claims

1. A coupling device which comprises:
axially opposed first and second members having respective mating surfaces defined therein so as to confront with each other the first member and the second member being adapted to be selectively connected with or separated from each other when one of the first and second members is axially moved relative to the other of the first and second members;
first and second circular rows of teeth provided on the mating surfaces of the first and second member, respectively, in coaxial relation with each other the teeth of the first and second circular rows being engageable with each other to position the first and second members in a direction circumferentially thereof when the teeth of the first and second circular rows are engaged; and
first and second contact areas having respective contact faces which cooperate with each other to position the first and second members in a direction axially thereof, when brought axially into contact with each other upon coupling of the first and second member together with the teeth of the first circular row engaged with the teeth of the second circular row.

2. The coupling device as claimed in claim 1, in which the first and second members are respective members that are rotatably supported.

3. The coupling device as claimed in claim 1 or 2, in which each of the teeth provided in one or both of the first and second members is formed with at least one trimmed void area for reducing the rigidity of such tooth.

4. The coupling device as claimed in claim 3, in which the trimmed void area is constituted by a radially extending groove.

5. The coupling device as claimed in claim 4, in which the radially extending groove is a V-sectioned groove.

6. The coupling device as claimed in claim 4 or 5, in which the radially extending groove is a slit having a groove width that is uniform in a direction towards the bottom thereof.

7. The coupling device as claimed in one of claims 3 to 6, in which the trimmed void area is constituted by a radially extending throughhole defined within each of the teeth,

8. The coupling device as claimed in one of the preceding claims, in which the first and second members are fitted to a main spindle and a chuck of a lathe turning machine, respectively, and cooperate with each other to define a joint at which the chuck is separably connected with the main spindle.

9. The coupling device as claimed in one of the preceding claims, in which the contact areas are positioned radially outwardly of the first and second circular rows of the teeth, respectively, and are formed respectively over the entire circumferences of the first and second members.

10. The coupling device as claimed in one of the preceding claims, in which the contact areas are positioned radially inwardly of the first and second circular rows of the teeth, and further comprising a sealing member, which permits respective outer peripheral portions of the first and second members radially outwardly of the first and second circular rows of the teeth to be held in engagement with each other with such sealing member intervening therebetween.
